# EUROPÄISCHE PATENTSCHRIFT

(11) **EP 0 875 089 B1**
(45) Veröffentlichungstag und Bekanntmachung des Hinweises auf die Patenterteilung: **04.01.2006**
(21) Anmeldenummer: 97911128.3
(22) Anmeldetag: 02.10.1997
(51) Int. Cl.: H02J 7/14, B60R 16/02

(54) **VORRICHTUNG ZUR SPANNUNGSVERSORGUNG**
POWER SUPPLY SYSTEM
SYSTEME D'ALIMENTATION ELECTRIQUE

(30) Priorität: 08.11.1996 DE 19646043
(43) Veröffentlichungstag der Anmeldung: 04.11.1998
(73) Patentinhaber: ROBERT BOSCH GMBH, 70442 Stuttgart (DE)
(72) Erfinder: STEFFAN, Bernhard, D-71640 Ludwigsburg (DE)
(86) Internationale Anmeldenummer: PCT/DE1997/002265
(87) Internationale Veröffentlichungsnummer: WO 1998/021805

(56) Entgegenhaltungen:
- DE-A- 3 743 317
- DE-A- 19 602 401
- DE-C- 4 311 229

## Beschreibung

Die Erfindung geht aus von einer Vorrichtung zur Spannungsversorgung nach der Gattung des Hauptanspruchs. Eine solche Vorrichtung umfaßt eine als Generator oder als Starter betreibbare elektrische Maschine, die von einer Brennkraftmaschine antreibbar ist und über einen Spannungszwischenkreis, der wenigstens einen Spannungswandler und wenigstens einen Umrichter umfaßt, mit einer Batterie, die die Verbraucher versorgt, verbindbar ist.

### Stand der Technik

Die Erzeugung elektrischer Energie, beispielsweise für ein Kraftfahrzeugbordnetz, erfolgt üblicherweise mit einem Drehstromgenerator, dessen Ausgangsspannung von einem Spannungsregler geregelt wird. Als Generatoren können elektrische Maschinen eingesetzt werden, die im Startfall auch als Starter dienen. Eine Vorrichtung zur Spannungsversorgung in einem Kraftfahrzeugbordnetz, bei der ein solcher Starter/Generator eingesetzt wird, ist beispielsweise aus der DE OS 37 43 317 bekannt. Dabei ist der Starter/Generator über einen Spannungszwischenkreis, der Umrichter und Spannungswandler umfaßt, mit der Batterie verbunden. Der Starter/Generator ist so ausgelegt, daß er im Generatorbetrieb eine Spannung erzeugt, die wesentlich höher ist als die Bordnetzspannung. Aus dieser wesentlich höheren Spannung wird die Bordnetzspannung unter Verwendung des Spannungswandlers erzeugt. Im Starterbetrieb erzeugt der Spannungswandler aus der Bordnetzspannung der Batterie die höhere Spannung für den Starter.

### Vorteile der Erfindung

Die erfindungsgemäße Vorrichtung zur Spannungsregelung mit den Merkmalen des Anspruchs 1 hat gegenüber der bekannten Lösung den Vorteil, daß die Spannung an der als Starter/Generator betreibbaren elektrischen Maschine in optimaler Weise an die beim Start und an die beim normalen Generatorbetrieb erforderlichen Bedürfnisse anpaßbar ist. Diese Spannungserfordernisse beim Start und während des normalen Betriebes sind derart, daß beim Start, wenn die elektrische Maschine als Starter betrieben wird, der den Motor auf eine relativ kleine Drehzahl (Startdrehzahl) bringen soll, eine geringe Spannung ausreicht, um ein geeignet großes Moment zu erzeugen, während im normalen Betrieb bei höheren Drehzahlen eine höhere Spannung zu einer besseren Spannungsversorgung für das Bordnetz führt. Daß beim Start nur eine geringe Spannung benötigt wird ist besonders vorteilhaft, da gerade beim Start von der Batterie eine geringere Leistung bzw. Spannung abgegeben werden kann.

Erzielt wird dieser Vorteil, indem der Spannungswandler während der Startphase überbrückt wird und der mit dem Starter/Generator in Verbindung stehende Umrichter mit der niedrigeren Bordnetz- bzw. Batteriespannung versorgt wird, während im Generatorbetrieb der Spannungswandler aktiviert wird, wodurch der Umrichter mit der höheren Spannung betrieben wird.

Weitere Vorteile der Erfindung werden durch die in den Unteransprüchen angegebenen Maßnahmen erzielt. Dabei ist besonders vorteilhaft, daß die Spannung im Startfall und im Normalbetrieb in gewissen Grenzen an die Erfordernisse anpaßbar ist, wobei geeignete Ansteuerungen der Umrichter oder Teilüberbrückungen des Spannungswandlers die Erzeugung verschiedener Spannungen ermöglichen. Da im Generatorbetrieb zum Erzielen eines guten Wirkungsgrades hohe Spannungen erwünscht sind, kann es vorteilhaft sein, den Generator so auszulegen, daß er Spannungen erzielt, die weit über der Bordnetzspannung liegen. Damit die Maximalleistung beim Betrieb der Maschine als Generator bis zur Höchstdrehzahl möglich ist, kann es hilfreich sein, bei Antrieben mit einem Feldschwächungs-bereich den Übergang auf Feldschwächung durch Rücknahme oder Verringerung der Wandlerüberbrückung zu variieren.

Als Spannungswandler muß nicht unbedingt ein bidirektionaler Spannungswandler verwendet werden, da eine Spannungswandlung nur in eine Richtung während des Generatorbetriebes erforderlich ist. Die Auslegung des Systems muß nicht auf die extremen Kaltstartwerte erfolgen, da die Startleistung nicht zwangsweise übertragen werden muß. Falls der Generatorbetrieb auf einem erhöhten Spannungsniveau stattfinden soll, können sich die Übertragungsverluste nennenswert verringern, der Wandler muß dann allerdings die erforderliche Potentialtrennung sicherstellen.

Als Schalter, der den Spannungswandler ganz oder teilweise überbrücken soll, kann ein mechanischer Trennschalter eingesetzt werden, da üblicherweise nur stromlos geschaltet werden soll. Als überbrückende Schalter können jedoch auch elektronische Bauelemente mit guten Durchlaßeigenschaften eingesetzt werden.

### Zeichnung

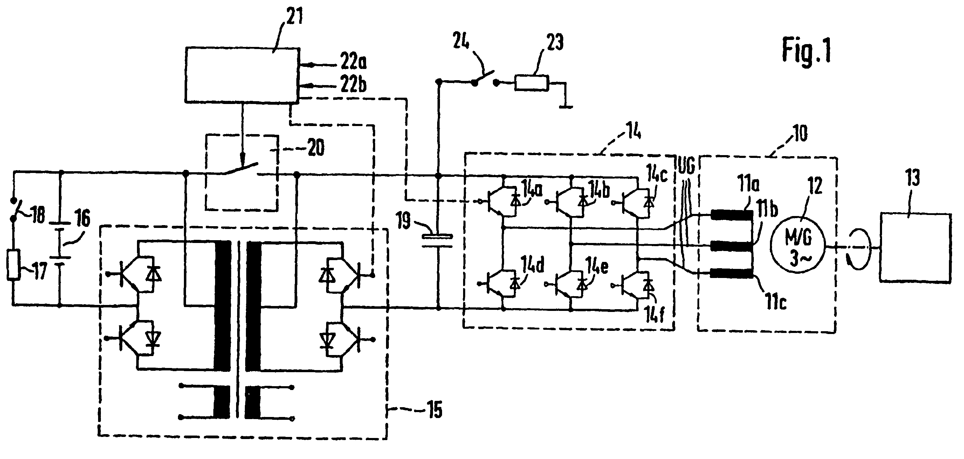

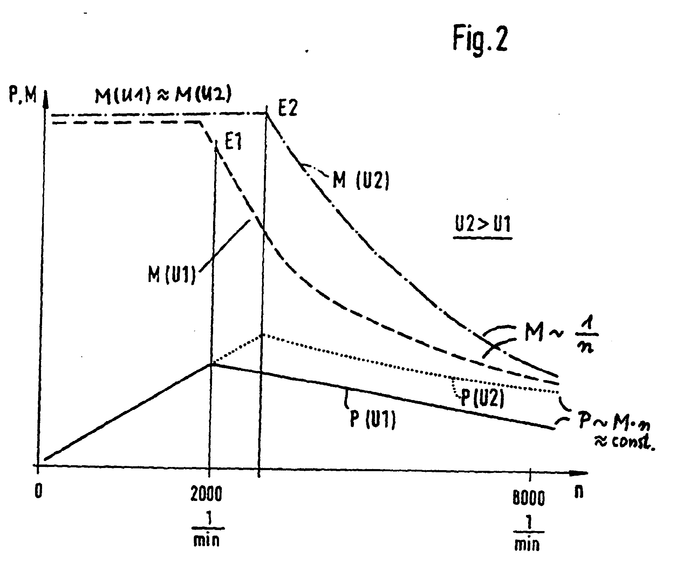

Ein Ausführungsbeispiel der Erfindung ist in Figur 1 dargestellt und wird in der nachfolgenden Beschreibung näher erläutert. In Figur 2 ist der Zusammenhang zwischen Leistung und Drehzahl bei einer elektrischen Maschine angegeben.

### Beschreibung des Ausführungsbeispieles

In der Figur 1 sind die für das Verständnis der Erfindung erforderlichen Komponenten eines Kraftfahrzeug-Bordnetzes dargestellt. Im einzelnen zeigt 10 die elektrische Maschine, die als Starter oder als Generator betrieben werden kann und die Ständerwicklungen 11a, 11b, 11c umfaßt, die beispielsweise als Sternschaltung geschaltet sind und im Generatorbetrieb an den Wicklungsenden jeweils eine Ausgangsspannung UG liefern, die letztendlich zur Versorgung des Fahrzeugbordnetzes dient. Im Starterbetrieb wird an die Wicklungsendungen eine Spannung angelegt, die den Rotor 12 des Starter/Generators in Rotation versetzt. Im Startfall wird durch den Starter/Generator die Brennkraftmaschine, die mit 13 bezeichnet ist, auf Startdrehzahl gebracht, wobei die erforderliche Leistung aus der Batterie 1b entnommen wird. Im Generatorbetrieb treibt die Brennkraftmaschine 13 den Starter/Generator in üblicher Weise an.

Der Starter/Generator 10 ist mit einem Pulswechselrichter 14 mit einem Spannungswandler 15 verbunden, der an die Batterie 16 angeschlossen ist. Die Batterie 16 dient zur Versorgung der elektrischen Verbraucher des Bordnetzes, die mit 17 bezeichnet sind und über einen Schalter 18 zugeschaltet werden können.

Zur Spannungsstabilisierung liegt zwischen dem Pulswechselrichter 14 und dem Spannungswandler 15 ein Kondensator 19. Am Kondensator 19 können Verbraucher 23 über einen Schalter 29 angeschlossen werden, die mit der höheren Spannung versorgt werden sollen. Der Spannungswandler 15 kann mit Hilfe eines Schaltelementes 20 überbrückt werden. Die Ansteuerung des Schaltelementes 20 erfolgt mittels einer Steuereinrichtung 21, der über Eingänge 22a, 22b Informationen bezüglich des Zustandes der Brennkraftmaschine und insbesonders Informationen bezüglich eines Startwunsches zugeführt werden. Die Steuereinrichtung 21 kann beispielsweise das Steuergerät der Brennkraftmaschine 13 sein, das auch die Steuer- und Regelvorgänge der Brennkraftmaschine durchführt.

Die Verschaltung des Pulswechselrichters 14 ist beispielsweise derart, daß jede der Ständerwicklungen 11a, 11b, 11c zwischen zwei Pulswechselrichterelementen 14a, 14d; 14b, 14e; 14c, 14f angeschlossen ist, wobei die anderen Anschlüsse der Pulswechselrichterelemente miteinander leitend verbunden sind und auf den Kondensator 19 führen. Die Pulswechselrichterelemente 14a bis 14f sind beispielsweise Transistoren sowie zugehörige Freilaufdioden, wobei die Transistoren von einer Regeleinrichtung 21 betätigbar sind.

Der Spannungswandler 15 ist im Ausführungsbeispiel als bidirektionaler Wandler dargestellt. Der Übertrager sowie die Ansteuertransistoren einschließlich der zugehörigen Freilaufdioden sind lediglich schematisch dargestellt, sie werden von der Steuereinrichtung 21 oder eigenen, nicht dargestellten Steuereinrichtungen angesteuert.

Sowohl der Pulswechselrichter 14 als auch der Spannungswandler 15 können in anderer Weise aufgebaut sein. Wesentlich ist, daß die Schaltmittel 20 eine Überbrückung des Spannungswandlers 15 unter vorgebbaren Bedingungen, also beispielsweise im Start gewährleisten.

Mit der in der Figur dargestellten Schaltungsanordnung soll eine Start-Verbesserung in einem Starter-/Generatorsystem mit Spannungszwischenkreis, das beispielsweise bei Verbrennungsmotoren in Kraftfahrzeugen eingesetzt werden kann, erzielt werden. Der Grundgedanke, von dem die erfindungsgemäße Vorrichtung ausgeht, wird durch die folgenden Bedingungen festgelegt: Der Start von Verbrennungsmotoren bzw. Brennkraftmaschinen bei abnehmenden Umgebungstemperaturen aufgrund der dann zunehmenden Reibung ein höheres Drehmoment bzw. mehr Leistung. Diese Leistung muß letztendlich von Starter bzw. Anlasser aufgebracht werden, der beim Start der Brennkraftmaschine aus der Batterie versorgt wird. Da jedoch gleichzeitig das Verhalten der zur Verfügung stehenden Batterien so ist, daß bei tiefen Temperaturen weniger Leistung abgegeben werden kann, entstehen beim Start von Brennkraftmaschinen bei tiefen Temperaturen Probleme. Diese Problemstellung ist allgemein als Kaltstartproblematik bekannt. Wie der Zusammenhang zwischen Moment und Drehzahl bzw. elektrischen Leistung und Drehzahl für unterschiedliche Spannungen ist, ist in Figur 2 schematisch dargestellt. In Figur 2 sind Momente M(U1), M(U2) und Leistungen P(U1), P(U2) für zwei unterschiedliche Spannungen U1 < U2 über der Drehzahl n aufgetragen. Jeweils bis zum Eckpunkt E1, E2 an dem die Feldschwächung beginnt, erfolgt ein Anstieg. Die Eckpunkte verschieben sich mit steigender Spannung zu größeren Drehzahlen.

Wird zur Erzeugung der elektrischen Energie für das Fahrzeugbordnetz eine elektrische Maschine eingesetzt, die sowohl als Starter als auch als Generator arbeiten kann, stellt sich neben den bereits erwähnten Kaltstartproblemen eine weitere Aufgabe, die darin besteht, sowohl den Startbetrieb als auch den Generatorbetrieb optimal durchzuführen. Da der Startbetrieb und der Generatorbetrieb bei unterschiedlichen Drehzahlen ablaufen wird eine Regelstrategie vorgeschlagen, die diese unterschiedlichen Drehzahlen berücksichtigt.

Der optimale Betrieb eines Starter-/Generators erfordert, daß er bei kleinen Drehzahlen, also im Startfall eine kleine Klemmenspannung benötigt, die über den Umrichter 14 durch Pulsbreitenmodulation aus der am Spannungszwischenkreis liegenden Spannung gebildet wird. Diese Spannung wird durch den Kondensator 19 des Spannungszwischenkreises stabilisiert. Wird im Startfall der Umschalter 20 geschlossen, liegt der Kondensator 19 direkt an der Batterie und die Spannung am Kondensator 19 entspricht der Batterie-bzw. Bordnetzspannung. Bei geschlossenem Umschalter 20 läßt sich somit der Starter-/Generator mit einer Spannung betreiben, die im wesentlichen der Batteriespannung entspricht. Der Starter-/Generator wirkt als Motor und bringt die Brennkraftmaschine auf die erforderlichen Startdrehzahlen. Die Betriebsspannung des Starters, die über den Umrichter, beispielsweise durch Pulsbreitenmodulation angepaßt wird, ist letztendlich eine Drehspannung, deren Maximalwert im wesentlichen proportional zur Bordnetzspannung ist.

Nach Beendigung des Startvorgangs soll der Starter/Generator 10 als Generator arbeiten. Er wird dann durch die Brennkraftmaschine über die übliche Kopplung angetrieben und gibt eine drehzahlabhängige Ausgangsspannung ab. Da im Generatorbetrieb eine möglichst hohe Ausgangsspannung gewünscht wird, erfolgt die Regelung des Generators so, daß die Ausgangsspannung UG höher ist als die Bordnetzspannung. Die Ausgangsspannung UG wird mit Hilfe der Pulswechselrichter 14 gleichgerichtet und dem Spannungswandler 15 zugeführt. Im Generatorbetrieb wird der Umschalter 20 geöffnet, so daß die Spannung UG abgesehen von den bereits am Kondensator ausgekoppelten Teil durch den Spannungswandler 15 weitergeleitet und so gewandelt bzw. verringert wird, daß die zur Versorgung der Batterie 16 benötigte Spannung, die im wesentlichen die Bordnetzspannung ist bzw. geringfügig höher ist, bereitgestellt wird. Die im Generatorbetrieb erzeugte Maximalleistung kann bis zur Höchstdrehzahl bereitgestellt werden. Hierzu hilfreich ist bei Systemen mit einem Feldschwächungsbereich den Übergang auf Feldschwächung durch Rücknahme der Wandlerüberbrückung zu höheren Drehzahlen zu verschieben. Die Ansteuerung des Umschalters erfolgt beispielsweise mit Hilfe einer eigenen elektronischen Einrichtung 21. Diese elektronische Einrichtung 21 kann auch das Steuergerät der Brennkraftmaschine sein, dem Informationen bezüglich ausgewählter Betriebsparameter der Brennkraftmaschine zugeführt werden und dem insbesonders der Beginn und das Ende des Startvorganges angezeigt werden.

Beim Spannungswandler kann unter Umständen auf die Bidirektionalität verzichtet werden, bzw. die Auslegung muß nicht auf die extremen Kaltstartwerte erfolgen, da die Startleistung nicht zwangsweise über den Spannungswandler übertragen werden muß, sondern über die durch die Schaltmittel 20 geschlossenen Überbrückungsmittel. Falls der Generatorbetrieb auf einem Spannungsniveau stattfinden soll, das gegenüber herkömmlichen Bordnetzspannung beträchtlich erhöht ist, erniedrigen sich die Übertragungsverluste wesentlich. Der Spannungswandler muß jedoch dann die vorgeschriebene Potentialtrennung sicherstellen, die ihrerseits wieder zu Verlusten führen kann.

Während der Zeit der Überbrückung wird die Batterieleistung dem Antrieb, also dem Starter bestmöglichst zur Verfügung gestellt. Die Ausführung des Schaltmittels 20 kann in Form eines mechanischen Trennschalters erfolgen, der nur stromlos geschaltet werden muß. Ebenso sind elektronische Bauelemente mit guten Durchlaßeigenschaften geeignet.

## Patentansprüche

1. Vorrichtung zur Spannungsversorgung mit einer als Generator oder als Starter betreibbaren elektrischen Maschine (12), die von einer Brennkraftmaschine (13) antreibbar ist und über einen Spannungszwischenkreis, der wenigstens einen spannungswandler (15) und wenigstens einen Umrichter (14) umfaßt, mit einer Batterie (16) verbindbar ist, **dadurch gekennzeichnet, daß** bei Betrieb der Maschine als Starter oder bei Betrieb als Generator unterhalb einer vorgebbaren Drehzahl der Spannungswandler (15) mittels eines Schaltelements (20) überbrückt wird und die Umrichter (14) direkt mit der Batterie (16) verbunden werden.

2. Vorrichtung zur Spannungsversorgung nach Anspruch 1, **dadurch gekennzeichnet, daß** der Spannungszwischenkreis wenigstens einen Kondensator (19) umfaßt, der dem Umrichter (14) zugeordnet ist oder Bestandteil des Umrichters (14) ist.

3. Vorrichtung zur Spannungsversorgung nach Anspruch 1 oder 2, **dadurch gekennzeichnet, daß** der Spannungswandler ein bidirektionaler Spannungswandler ist, dessen eine Seite im wesentlichen auf Bordnetzspannung UB und dessen andere Seite auf einer gegenüber Bordnetzspannung höheren Spannung liegt.

4. Vorrichtung zur Spannungsversorgung nach Anspruch 1, 2 oder 3, **dadurch gekennzeichnet, daß** das Schaltelement (20) als mechanischer Trennschalter oder als elektronisches Bauelement, das in leitendem Zustand nur geringen Widerstand aufweist, aufgebaut ist.

5. Vorrichtung zur Spannungsversorgung nach einem der vorhergehenden Ansprüche, **dadurch gekennzeichnet, daß** eine Steuereinrichtung (21) vorhanden ist, die zugeführte Informationen verarbeitet, insbesonders Informationen bezüglich des Vorliegens eines Startwunsches oder der Beendigung des Startvorgangs und die in Abhängigkeit von wenigstens einer dieser Informationen eine Ansteuerung zur Betätigung des Schaltelementes (20) auslöst.

6. Vorrichtung zur Spannungsversorgung nach einem der vorhergehenden Ansprüche, **dadurch gekennzeichnet, daß** der Pulswechselrichter sechs Pulswechselrichterelemente mit jeweils einem Transistor und einer Freilaufdiode umfaßt, die in einer Pulsbreitenmodulation betrieben werden und die am Kondensator (19) liegende Gleichspannung in drei jeweils um 120° verschobene Wechselspannungen wandelt, die den Statorwicklungen (11a, 11b, 11c) zugeführt werden.

7. Vorrichtung zur Spannungsversorgung nach einem der vorherigen Ansprüche, **dadurch gekennzeichnet, daß** am Kondensator 19 Verbraucher anschließbar sind, die zumindest zeitweilig mit einer Spannung versorgt werden können, die höher als die Bordnetzspannung ist.

## Claims

1. Power supply device having an electric machine (12) which can be operated as a generator or as a starter, can be driven by an internal combustion engine (13) and can be connected to a battery (16) via a voltage intermediate-circuit which comprises at least one voltage transformer (15) and at least one converter (14), **characterized in that** when the machine is operating as a starter or when the generator is operating below a predefinable rotational speed the voltage transformer (15) is bypassed by means of a switching element (20) and the converters (14) are connected directly to the battery (16).

2. Power supply device according to Claim 1, **characterized in that** the voltage intermediate-circuit comprises at least one capacitor (19) which is assigned to the converter (14) or is a component of the converter (14).

3. Power supply device according to Claim 1 or 2, **characterized in that** the voltage transformer is a bidirectional voltage transformer, one side of which is connected essentially to the on-board power system voltage UB and the other side of which is connected to a voltage which is higher than the on-board power system voltage.

4. Power supply device according to Claim 1, 2 or 3, **characterized in that** the switching element (20) is constructed as a mechanical circuit breaker or as an electronic component which has only a small resistance in the conductive state.

5. Power supply device according to one of the preceding claims, **characterized in that** there is a control device (21) which processes the supplied information, in particular information relating to the presence of a starting request or the termination of the starting request and which triggers actuation as a function of at least one of these information items, in order to activate the switching element (20).

6. Power supply device according to one of the preceding claims, **characterized in that** the pulse-controlled inverter comprises six pulse-controlled inverter elements, each with a transistor and a freewheeling diode, which are operated with pulse-width modulation and said pulse-controlled inverter converts the d.c. voltage present at the capacitor (19) into three a.c. voltages which are each shifted through 120° and are supplied to the stator windings (11a, 11b, 11c).

7. Power supply device according to one of the preceding claims, **characterized in that** loads which can be supplied at least temporarily with a voltage which is higher than the on-board power system voltage can be connected to the capacitor (19).

## Revendications

1. Dispositif d'alimentation en tension comprenant une machine électrique (12) fonctionnant comme générateur ou démarreur, entraînée par un moteur à combustion interne (13) et reliée à une batterie (16) via un circuit de tension intermédiaire comportant au moins un convertisseur de tension (15) et au moins un onduleur (14),
**caractérisé en ce que**
lors du fonctionnement de la machine comme démarreur ou générateur, en dessous d'un régime prédéterminé, le convertisseur de tension (15) est court-circuité au moyen d'un élément de commutation (20) et l'onduleur (14) est directement relié à la batterie (16).

2. Dispositif d'alimentation en tension selon la revendication 1,
**caractérisé en ce que**
le circuit de tension intermédiaire comprend au moins un condensateur (19) associé à l'onduleur (14) ou qui est un composant de l'onduleur (14).

3. Dispositif d'alimentation en tension selon la revendication 1 ou 2,
**caractérisé en ce que**
le convertisseur de tension est un convertisseur de tension bidirectionnel dont le premier côté est pour l'essentiel à la tension de bord UB et l'autre côté est à une tension supérieure à la tension de bord.

4. Dispositif d'alimentation en tension selon la revendication 1, 2 ou 3,
**caractérisé en ce que**
l'élément de commutation (20) est un sectionneur mécanique ou rncomposant électronique présentant dans l'état conducteur une faible résistance.

5. Dispositif d'alimentation en tension selon l'une des revendications précédentes,
**caractérisé en ce qu'**
un dispositif de commande (21) traite les informations envoyées, en particulier les informations relatives à la présence d'un souhait de démarrage ou à la fin du processus de démarrage, et déclenche en fonction d'au moins l'une de ces informations une commande pour l'actionnement de l'élément de commutation (20).

6. Dispositif d'alimentation en tension selon l'une des revendications précédentes,
**caractérisé en ce que**
l'onduleur à impulsion comprend six éléments d'onduleur à impulsion comprenant respectivement un transistor et une diode de roue libre, qui fonctionnent en modulation de largeur d'impulsion et convertissent la tension continue régnant au niveau du condensateur (19) en trois tensions alternatives respectivement décalées de 120°, envoyées aux enroulements du stator (11a, 11b, 11c).

7. Dispositif d'alimentation en tension selon l'une des revendications précédentes,
**caractérisé en ce qu'**
au condensateur (19) peuvent être reliés des consommateurs qui peuvent être alimentés au moins temporairement avec une tension supérieure à la tension de bord.
